# EUROPEAN PATENT APPLICATION

(11) **EP 2 980 524 A1**
(43) Date of publication of application: **03.02.2016**
(21) Application number: 14773150.9
(22) Date of filing: 11.03.2014
(51) Int. Cl.: G01B 5/00, G01B 7/00

(54) **SHIFT POSITION DETECTION DEVICE**

(30) Priority: 29.03.2013 JP 2013072098
(71) Applicant: Nippon Seiki Co., Ltd., Nagaoka-shi, Niigata 940-8580 (JP)
(72) Inventor: HAYAKAWA,Toshio, Niigata (JP)
(74) Representative: Carpmaels & Ransford LLP
(86) International application number: PCT/JP2014/056330
(87) International publication number: WO 2014/156615

(57) **Abstract**

A shift position detection device that has excellent durability and is capable of detecting many shift positions is provided. The present invention is a shift position detection device (1) provided with a shaft (21) that is a moving body that touches and is displaced by a cam (4) that is a displacement member displaced according to changes in the shift position of the transmission of a vehicle; a magnet (22) that is displaced with the shaft (21); a magnetism detecting element (23a) that detects the displacement of the magnet (22) and outputs a detection signal; a display device (32) that displays a shift position on the basis of the detection signal of the magnetism detecting element (23a); and a control device (31) that controls the display device (32) on the basis of the detection signal. A memory unit (31d) is provided for storing an output signal that controls the display device (32) and is based on the detection signal of the magnetism detecting element (23a), and the output signal, which is based on the detection signal and is stored in the memory unit (31d), can be rewritten.

## Description

### TECHNICAL FIELD

The present invention relates to a shift position detection device.

### BACKGROUND ART

As a conventional shift position detection device, for example, there is the one disclosed in Patent Literature 1.

### CITATION LIST

### PATENT LITERATURE

Patent Literature 1: Japanese Unexamined Patent Application Publication No. 2003-208834

### SUMMARY OF THE INVENTION

### PROBLEMS TO BE SOLVED BY THE INVENTION

In the conventional shift position detection device, a contact part of a movable terminal is of a contact type which comes into contact with a fixed terminal and thus an area of the contact is worn due to frequent use, and there has been a problem in terms of durability. Also, because of detection by a mechanical contact point, the number of detections of the shift positions is limited, and there has been a problem that it is impossible to cope with a case in which many shift position detections are required.

Accordingly, the present invention has been made in order to solve the problem described above, and it is an object of the present invention to provide a shift position detection device that has excellent durability and is capable of detecting many shift positions.

### MEANS FOR SOLYING THE PROBLEMS

A shift position detection device according to present invention comprising: a moving body that is displaced in contact with a displacement member displaced with a change of a shift position of a position transmission of a vehicle; a magnet that is displaced together with the moving body; a magnetism detection element that detects displacement of the magnet and then outputs a detection signal; a display device that displays a shift position on a basis of the detection signal of the magnetism detection element; and a control device that controls the display device on the basis of the detection signal, wherein a storage unit that stores an output signal that controls the display device on the basis of the detection signal of the magnetism detection element is provided, and wherein the output signal based on the detection signal, stored in the storage unit, can be rewritten.

The storage unit is provided in the control device.

The storage unit is provided in a magnetism detection unit comprising the magnetism detection element.

An external input means that connects to the control device is provided, and by the external input means, the stored content that is stored in the storage unit is rewritten.

The external input means is operating means of a gauging device provided in the vehicle.

### EFFECT OF THE INVENTION

With the construction described above, the present invention can achieve an intended object, and can provide a shift position detection device that has excellent durability and is capable of detecting many shift positions.

### BRIEF DESCRIPTION OF THE DRAWINGS

[Fig. 1] Fig. 1 is a block diagram showing a configuration of a shift position detection device of a first embodiment of the present invention.
[Fig. 2] Fig. 2 is a sectional view of a position detection device of the embodiment.
[Fig. 3] Fig. 3 is a block diagram showing a configuration of a magnetism detection unit of the embodiment.
[Fig. 4] Fig. 4 is a graph showing a relationship between a detection signal and an output signal of the embodiment.
[Fig. 5] Fig. 5 is a side view of a displacement member of another embodiment of the present invention.
[Fig. 6] Fig. 6 is a side view of a displacement member of a further embodiment of the present invention.
[Fig. 7] Fig. 7 is a side view of a displacement member of a furthermore embodiment of the present invention.

### MODE FOR CARRYING OUT THE INVENTION

Hereinafter, an embodiment of the present invention will be described with reference to the accompanying drawings.

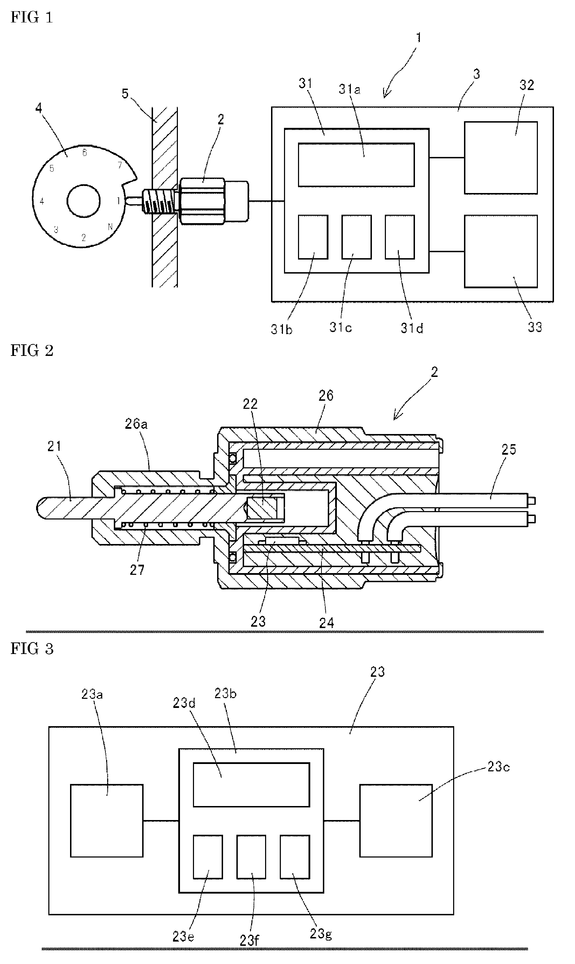

A shift position detection device 1 of the embodiment of the present invention detects a shift position of a transmission of a vehicle such as a bicycle, and is mainly composed of a position detection device 2 and a gauging device 3. It is to be noted that reference numeral 4 designates a cam which is displacement member and is metallic. In the case of bicycle, the cam 4 is rotated by operation of a shifting pedal operated by a driver of the vehicle, and is intended to rotate with a change of the shift position. The cam 4 has a different distance from a rotational center to an outer circumference. Utilizing the different distance from the rotational center to the outer circumference, an outer circumference of the cam 4 corresponds to the shift position. In the embodiment, a first shift of the transmission is assigned to a portion at which the distance from the rotational center to the outer circumference is the shortest, a neutral shift is assigned to a portion at which the distance is short, and a second shift and a third shift are assigned to their appropriate portions. It is to be noted that, in Fig. 1, although numerals and alphabetical letters are assigned to the outer circumference of the cam 4, these numerals and alphabetical letters are added for the sake of description of the embodiment. Reference numeral 5 designates a casing to house the transmission of the vehicle, and the position detection device 2 is fixed.

The position detection device 2 is intended to convert, to an electrical signal, a distance from the cam 4 that is rotated by operation of the shifting pedal of a gear which is operated by the driver of the vehicle and then output the converted electrical signal to the gauging device 3.

The position detection device 2 is composed of: a shaft 21 which is a moving body; a magnet 22; a magnetism detection unit 23; a circuit board 24; a cord 25; a housing 26; and a spring 27.

The shaft 21 is a metallic rod-like member, comes into contact with the outer circumference of the cam 4, and is intended to convert a rotational movement of the cam 4 to a linear movement. The shaft 21 is always pushed against the cam 4 by way of the spring 27.

The magnet 22 is fixed to the shaft 21, and is intended to be displaced together with the shaft 21.

The magnetism detection unit 23 is intended to detect a change in magnetic field exerted by the displacement of the magnet 22 and then output a detection signal based on a movement quantity of the magnet 22. Fig. 3 is a block diagram showing an electrical configuration of the magnetism detection unit 23 that is composed of a magnetism detection element 23a, a control unit 23b, and an output unit 23c.

The magnetism detection element 23a is made of a Hall effect device or a magnetic resistance effect element or the like, and is intended to detect a magnetic field vector associated with a position of the magnet 22 and then outputs a detection signal to the control unit 23b.

The control unit 23b is provided with: a CPU 23d which is a computing unit; a read-only memory (hereinafter, referred to as a ROM) 23e which is a rewriting-disable storage unit; a random access memory (hereinafter, referred to as a RAM) 23f which is a temporary storage unit used at the time of computation of the CPU 23d; and an EEPROM 23g which is a rewritable nonvolatile storage unit.

In the ROM 23e, programs or the like to drive the magnetism detection element 23a are stored. The RAM 23f is intended to temporarily store variables or the like utilized by the programs. The EEPROM 23g stores in advance information related to the detection signal and the output signal that are associated with the position of the magnet 22 detected by the magnetism detection element 23a, that is, magnetism position information relative to a magnetic field vector of the magnet. The CPU 23d refers to the EEPROM 23g, and converts the magnetic field vector that is detected by the magnetism detection element 23a, to the position of the magnet 12.

The output unit 23c outputs an output signal based on the position of the magnet 22 computed by the CPU 23d.

The circuit board 24 is made of a hard insulation material, and is provided with an electrically conductive pattern which is not shown. On the circuit board 24, the magnetism detection element 23 and the cord 25 are implemented.

The cord 25 is intended to electrically connect the circuit board 24 and the gauging device 3 to each other. In the embodiment, although the cord 25 is obtained by covering an electrically conductive material with an insulation material, this cord may be a metallic lead as long as it is possible to output an output signal to an external device such as the gauging device 3.

The housing 26 is intended to house the shaft 21, the magnet 22, the magnetism detection element 23, the circuit board 24, and the cord 25 or the like, and is metallic in the embodiment. The housing 26 is provided with a screw part 26a, and is fixed to a casing 5 by way of the screw part 26a.

The gauging device 3 is composed of a control device 31, a display device 32, and external input means 33.

The control device 31 is provided with: a CPU 31a which is a computing unit; a read-only memory (hereinafter, referred to as a ROM) 31b which is a non-rewritable storage unit; a random access memory (hereinafter, referred to as a RAM) 31c which is a temporary storage unit used at the time of computation of the CPU 31a; and an EEPROM 31d which is a rewritable nonvolatile storage unit.

In the ROM 31b, programs or the like to drive the gauging device 3 are stored. The RAM 31c is intended to temporarily store variables or the like utilized by the programs. The EEPROM 31d stores information as to a detection signal associated with the position of the magnet 22 output by the magnetism detection unit 23 and information as to an output signal which is display information displayed by the display device 32 on the basis of the detection signal. That is, an output signal to the display device 32 relative to the detection information that is output from the magnetism detection unit 23 is stored in advance. The CPU 31a refers to the EEPROM 31d, and converts the detection signal that is output by the magnetism detection unit 23, to an output signal of the display device 32.

The display device 32 is a device which is composed of a liquid crystal display element or an organic light emitting diode display element, or alternatively, a plurality of light sources, and is capable of displaying at least a shift position in the embodiment.

The external input means 33 is operating means of the gauging device 3, and for example, is a trip knob to reset the number of measurements of a distance gauge such as a trip meter. This external input means 33 is used as a switch when the control device 31 is changed from a normal mode to a correction mode in which the information stored in the EEPROM 31d is corrected or when the correction mode is changed to the normal mode. This external input means can also be used as a switch to rewrite the contents stored in the EEPROM 31d in the control device 31.

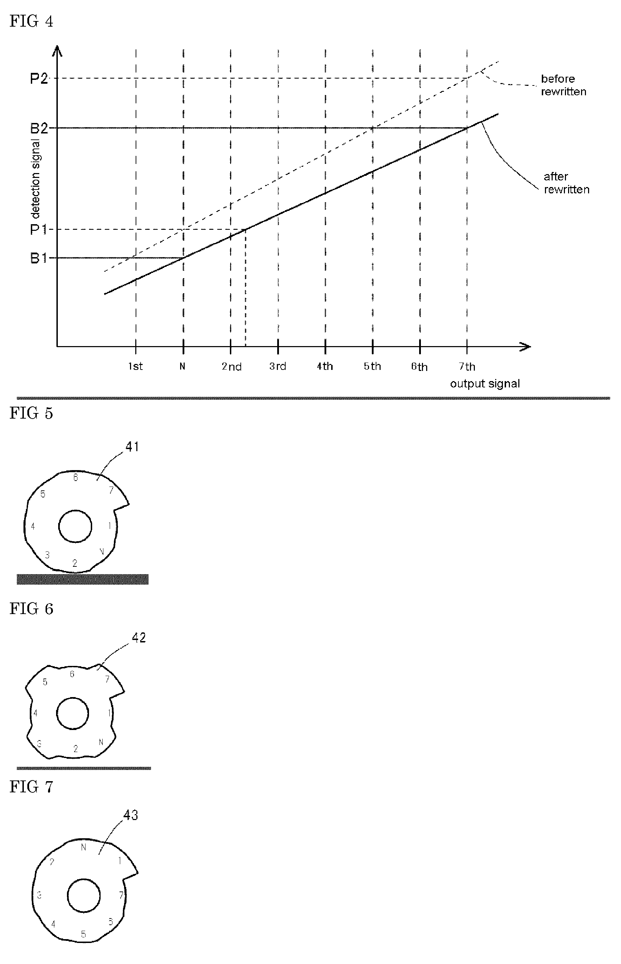

Referring to Fig. 5, rewriting of information in the EEPROM 31d of the embodiment will be described.

In general, in so far as a distance between the casing 5 and the cam 4 is concerned, a distortion occurs due to a dimensional error of each part and a positional error at the time of assembling. Due to this distortion of distance, in so far as the output signal of the position detection device 2 relative to the position of the cam 4 is concerned, an error occurs to an intended output signal at an initial stage of designing, and there occurs a problem that a precise position of the cam 4 cannot be detected. That is, as a detection signal before rewritten, in a relationship with an output signal, at the time of a detection signal P1 before rewritten, an neutral output signal has been output; and however, due to the error at the time of assembling mentioned above, in the case of the detection signal after rewritten and the output signal, shown in Fig. 4, in so far as the detection signal P1 is concerned, an output signal as the second shift is output, and the precise position of the cam 4 could not be detected.

As another distortion, there is also a dimensional distortion of the cam 4 by the vehicle. Due to this dimensional distortion as well, in so far as the output signal of the position detection device 2 relative to the position of the cam 4 is concerned, an error occurs to the intended output signal at the initial stage of designing, and there occurs the problem that the precise position of the cam 4 cannot be detected.

As still another distortion, due to contact between the cam 4 and the shaft 21, due to friction of the cam 4 or the shaft 21, in so far as the output signal of the position detection device 2 relative to the position of the cam 4 is concerned, an error occurs to the intended output signal at the initial stage of designing, and there occurs the problem that the precise position of the cam 4 cannot be detected.

Accordingly, in the embodiment, after the position detection device 2 has been assembled to a vehicle body, or alternatively, after the elapse of a predetermined period of time subsequent to assembling, the information stored in the EEPROM 31d in the control device 31 is rewritten in accordance with mounting to the vehicle, of the position detection device 2, to be thereby able to detect the precise position of the cam 4 with a less significant error which is the intended output signal at the initial stage of designing.

Rewriting of the information that is stored in the EEPROM 31d in the control device 31 will be described below.

The control device 31 migrate to a correction mode on the basis of a first operation (first input information) in which the external input means 32 has been operated. At this time, on the display device 32, the correction mode is displayed.

Subsequent to the migration to the correction mode, the driver operates the position shifting pedal of the vehicle and then sets the gear of the position transmission to the neutral position. At this time, on the display device 32, there may be displayed the fact that "the external input means 32 is operated after the gear of the position transmission has been selected to be neutral". In the embodiment, this neutral position is a first correction point, and in a state in which the gear of the position transmission of the vehicle has been set to be neutral at this first correction point (in a state in which a detection signal B1 has been output from the position detection device 2), on the basis of a second operation (second input information) in which the external input means 32 has been operated, the detection signal B1 of the position detection device 2 is rewritten to information for determining the detection signal to be neutral.

Next, the driver operates the position shifting pedal of the vehicle, and sets the gear of the position transmission to the highest gear position (a seventh shift in the embodiment). At this time, on the display device 32, there may be displayed the fact that "the external input means 32 is operated after the gear of the position transmission has been selected to be the seventh shift". In the embodiment, this position of the seventh shift is a second correction point, and in a state in which the gear of the position transmission of the vehicle has been set to the seventh shift at this second correction point (in a state in which a detection signal B2 has been output from the position detection device 2), on the basis of a third operation (third input information) in which the external input means 32 has been operated, the detection signal B2 of the position detection device 2 is rewritten to information for determining the detection signal to be the seventh shift. Then, on the basis of a fourth operation (fourth input information) in which the external input means 32 has been operated, the correction mode migrates to the normal mode and rewriting of the information completes. At this time, on the display device 32, there may be displayed the fact that the correction mode has migrated to the normal mode. Also, at the time of this mode migration, from the information as to two points of the neutral shift and the seventh shift, the information leading up to the first shift and the third to sixth shifts are estimated and then rewriting of the information is carried out.

As described above, the information as to the two points of the neutral shift and the seventh shift of the position transmission of the vehicle is rewritten, whereby the precise position of the shaft 21 can be detected.

It is to be noted that, in the rewriting procedure mentioned hereinbefore, although the two points of the neutral shift and the seventh shift were exemplified, the correction points as a base for rewriting are not limited thereto, and each shift position may be a correction point.

In view of the foregoing description, even in a case where an assembling error of the position detection device 2 occurs or in a case where the shaft 21 has been worn, the errors as to the detection signal and the output signal can be rewritten and corrected, and it is possible to provide a shift position detection device that has excellent durability. Also, there is no need to provide a contact point for each detection point as in the conventional detection device, and it is possible to provide a shift position detection device that is capable of detecting many shift positions by detecting the displacement of the shaft 21.

It is to be noted that, although in the embodiment described hereinbefore, data as to the detection signal and the output signal was stored in the EEPROM 31d provided in the gauging device 3, the data as to the detection signal and the output signal may be stored in the EEPROM 23g provided in the position detection device 2 without being limited to the embodiment.

Also, the shape of the cam 4 is not limited to the shaft in which the outer circumference thereof is formed in a curved shape as in the embodiment, and the cam 41 shown in Fig. 5 may be a cam 41 which has a different distance from the rotational center to the outer circumference, depending on the shift position, but which has an equal distance from the rotational center to the outer circumference corresponding to each shift position.

In addition, in so far as the shape of the cam is concerned, the distance from the rotational center to the outer circumference does not need to be long every time the number of speeds in position shifting increases, and the cam 42 shown in Fig. 6 may be formed in an irregular shape in which the distance from the rotational center to the outer circumference is long or short every time the number of speeds in position shifting increases.

Further, in so far as the shape of the cam is concerned, the distance from the rotational center to the outer circumference does not need to be long every time the number of speeds in position shifting increases, and the cam 43 shown in Fig. 7 may be short in the distance from the rotational center to the outer circumference every time the number of speeds in position shifting increases.

### INDUSTRIAL APPLICABILITY

The present invention is applicable to a shift position detection device for detecting a shift position.

### DESCRIPTION OF REFERENCE NUMERALS

- 1: Shift position detection device
- 2: Position detection device
- 3: Gauging device
- 4: Displacement member (cam)
- 5: Casing
- 21: Moving body (shaft)
- 22: Magnet
- 23: Magnetism detection unit
- 23a: Magnetism detection element
- 23b: Control unit
- 23c: Output unit
- 23d: CPU
- 23e: ROM
- 23f: RAM
- 23g: EEPROM
- 24: Circuit board
- 25: Cord
- 26: Housing
- 26a: Screw part
- 27: Spring
- 31: Control device
- 31a: CPU
- 31b: ROM
- 31c: RAM
- 31d: EEPROM
- 32: Display device
- 33: External input means

## Claims

1. A shift position detection device comprising:
a moving body that is displaced in contact with a displacement member displaced with a change of a shift position of a position transmission of a vehicle;
a magnet that is displaced together with the moving body;
a magnetism detection element that detects displacement of the magnet and then outputs a detection signal;
a display device that displays a shift position on a basis of the detection signal of the magnetism detection element; and
a control device that controls the display device on the basis of the detection signal,
wherein a storage unit that stores an output signal that controls the display device on the basis of the detection signal of the magnetism detection element is provided, and
wherein the output signal based on the detection signal, stored in the storage unit, can be rewritten.

2. The shift position detection device according to claim 1, wherein the storage unit is provided in the control device.

3. The shift position detection device according to claim 1, wherein the storage unit is provided in a magnetism detection unit comprising the magnetism detection element.

4. The shift position detection device according to claim 1, wherein external input means that connects to the control device is provided, and by the external input means, the stored content that is stored in the storage unit is rewritten.

5. The shift position detection device according to claim 4 , wherein the external input means is operating means of a gauging device provided in the vehicle.
